# EUROPEAN PATENT SPECIFICATION

(11) **EP 4 370 984 B1**
(45) Date of publication and mention of the grant of the patent: **18.02.2026**
(21) Application number: 21957046.2
(22) Date of filing: 15.09.2021
(51) Int. Cl.: G05B 19/418

(54) **INDUSTRIAL DATA INTEGRATION DEVICE, METHOD AND COMPUTER READABLE STORAGE MEDIUM**
VORRICHTUNG ZUR INTEGRATION INDUSTRIELLER DATEN, VERFAHREN UND COMPUTERLESBARES SPEICHERMEDIUM
DISPOSITIF D'INTÉGRATION DE DONNÉES INDUSTRIELLES, PROCÉDÉ ET SUPPORT DE STOCKAGE LISIBLE PAR ORDINATEUR

(43) Date of publication of application: 22.05.2024
(73) Proprietor: Siemens Aktiengesellschaft, 80333 München (DE)
(72) Inventor: YU, Zhiqiang, Qingdao Shandong 266555 (CN); WANG, Lu, Qingdao, Shandong 266000 (CN); YANG, Zhanbin, Qingdao, Shandong 266042 (CN); QIU, Wenqing, Beijing West Road, Laixi, Shandong 266600 (CN); YU, Qi, Nanjing, Jiangsu 211100 (CN)
(74) Representative: Isarpatent
(86) International application number: PCT/CN2021/118567
(87) International publication number: WO 2023/039756

(56) References cited:
- CN-A- 110 708 240
- CN-A- 111 756 809
- DE-A1- 102008 027 846
- DE-A1- 102010 029 953
- JP-A- 2001 290 724
- US-A1- 2007 280 287
- US-A1- 2017 374 155
- US-A1- 2017 374 155
- US-A1- 2020 067 789
- US-A1- 2020 067 789
- "Information technology - Internet of things (IoT) - IoT use cases", 22 November 2017 (2017-11-22), pages 1 - 137, XP082032046, Retrieved from the Internet <URL:https://api.iec.ch/harmonized/publications/download/248437> [retrieved on 20171122]

## Description

### FIELD

The present invention relates to the field of industrial technology, in particular to an industrial data integration device, method and computer readable storage medium.

### BACKGROUND

For the industrial field, there are a large number of different types of equipment with different operating protocol interfaces. Even in an industrial automation production line, it is composed of several different devices, and each device has its own proprietary data exchange protocol interface.

The industry's decision-making process is based on global data from most underlying devices (rather than individual devices). Therefore, the main problem is how to integrate those different devices (including existing devices and even later additional devices (smart and non-smart devices)) and how to collect and analyze data, and so on. Due to the variety of data exchange protocol interfaces, it is impossible for the upper business layer to understand and develop all the data exchange protocol interfaces to interact with various bottom devices to collect data. At the same time, considering the possibility of adding new equipment and replacing old equipment or malfunctioning equipment in the future, it is also necessary for the upper business layer to make dynamic changes to adapt to the new protocol interface. The effort and cost to keep changing is huge.

On the one hand, formulate international standards to standardize interface protocols and recommend equipment manufacturers to follow these standards. For example, the OPC UA standard is a well-known industrial data exchange standard that allows easy and secure exchange of information between different platforms from multiple vendors, and allows seamless integration of these platforms without the need for expensive and time-consuming software development. Although many manufacturers support the OPC UA standard, especially those world-renowned manufacturers, there are still many manufacturers that do not support the OPC UA standard and use its proprietary interface protocol in their products.

On the other hand, only collect data from the underlying equipment that is standardized on the interface protocol and supported by the upper business layer. For example, only collect data from devices that support Modbus RTU, Modbus TCP, and OPC UA. This solution leads to sub-optimal decisions, and sometimes even wrong ones. Because the decision is only based on partial data of those special equipment. In addition, the solution reduces the flexibility of enterprise choice.

For those devices with non-standardized interface protocols, there are two options to choose from. The first option is to add a standardized wrapper on the device, such as an OPC UA wrapper. The wrapper implements the OPC UA standard, and then it can interoperate with other standardized OPC UA systems. The wrapper acts as a converter, which converts the device proprietary interface protocol format and the OPC UA format in both directions. This option requires the equipment to allow the addition of a wrapper, but it is usually impossible to change the existing equipment in the industrial field. The second option is to replace devices with non-standardized interface protocols and use smart devices that already support the OPC UA standard, but the cost is very high.

US 2017/0374155 A1 relates to a framework with protocol-specific drivers that allow communication with heterogeneous devices, including those using proprietary non-standard implementations, and it further provides a discovery mechanism by which devices and their available services can be identified.

### SUMMARY

The embodiment of the present invention proposes an industrial data integration device, method and computer readable storage medium.

In a first aspect, an industrial data integration device is provided. The device comprising:
a first interaction module, configured to interact with a first industrial field device based on a non-standard protocol;
a life cycle management module, configured to manage a life cycle of the first interaction module (101);
a service discovery module, configured to discover a first service provided by the first interaction module, where the first service is related to the interaction between the first interaction module and the first industrial field device.

It can be seen that the embodiment of the present invention realizes an industrial data integration device as a middleware platform in the industrial field, which can discover services provided by industrial field devices based on non-standard protocols, and shields the heterogeneity of industrial field devices. Moreover, online hot update is also realized.

Preferably, comprising:
a second interaction module, configured to interact with a second industrial field device based on a standard protocol;
wherein the life cycle management module is further configured to manage a life cycle of the second interaction module; the service discovery module is further configured to discover a second service provided by the second interaction module, wherein the second service is related to the interaction between the second interaction module and the second industrial field device.

Therefore, the industrial data integration device can also discover the services provided by industrial field devices based on standard protocols.

Preferably, comprising:
a service providing module, configured to register the first service or the second service, and provide the registered first service or the registered second service via a Web server.

It can be seen that the first service or the second service can be registered and provided through Web server, and the Web server can provide a unified interface for upper business layer.

Preferably, wherein the life cycle management module is configured to receive configuration information of the first interaction module, wherein the configuration information of the first interaction module includes a first description field with a first general data structure and a second description field with a second general data structure, the first description field describing the first service provided by the first interaction module and a third service required by the first interaction module, the second description field describing a basic information of the first interaction module and callback functions related to the life cycle of the first interaction module; determine the first service and the third service by parsing the first description field; determine basic information of the first interaction module and callback functions related to the life cycle of the first interaction module by parsing the second description field; and manage the life cycle of the first interaction module by using the basic information of the first interaction module and the callback functions related to the life cycle of the first interaction module; the service discovery module is configured to establish a first mapping relationship between the first service and the third service, and initiate a registration process for the first service according to the basic information of the first interaction module and the first mapping relationship.

Through the first description field with the first general data structure, the registration process for the first service can be realized, and by the second description field with the second general data structure, the life cycle management for the first interaction module can be realized.

Preferably, wherein the life cycle management module is configured to receive configuration information of the first interaction module, wherein the configuration information of the first interaction module includes a first description field with a first general data structure and a second description field with a second general data structure, the first description field describing the first service provided by the first interaction module and a third service required by the first interaction module, the second description field describing a basic information of the first interaction module and callback functions related to the life cycle of the first interaction module; determine the first service and the third service by parsing the first description field; determine basic information of the first interaction module and callback functions related to the life cycle of the first interaction module by parsing the second description field; and manage the life cycle of the first interaction module by using the basic information of the first interaction module and the callback functions related to the life cycle of the first interaction module; the service discovery module is configured to establish a first mapping relationship between the first service and the third service, and initiate a registration process for the first service according to the basic information of the first interaction module and the first mapping relationship;
wherein the life cycle management module is configured to receive configuration information of the second interaction module, wherein the configuration information of the second interaction module includes a third description field with the first general data structure and a fourth description field with the second general data structure, the third description field describing the second service provided by the second interaction module and a fourth service required by the second interaction module, the fourth description field describing a basic information of the second interaction module and callback functions related to the life cycle of the second interaction module; determine the second service and the fourth service by parsing the third description field; determine basic information of the second interaction module and callback functions related to the life cycle of the second interaction module by parsing the fourth description field; and manage the life cycle of the second interaction module by using the basic information of the second interaction module and the callback functions related to the life cycle of the second interaction module; the service discovery module is configured to establish a second mapping relationship between the second service and the fourth service, and initiate a registration process for the second service according to the basic information of the second interaction module and the second mapping relationship.

Therefore, through the first description field with the first general data structure, a unified registration process for the first service and the second service can be realized. Through the second description field with the second general data structure, a unified life cycle management for the first interaction module and the second interaction module can be realized. A unified configuration is realized for industrial field equipment that adopts standard protocols or non-standard protocols.

Preferably, comprising an authentication module, configured to perform authentication processing on a requesting party requesting access to the registered first service or the registered second service.

It can be seen that the authentication processing of the requesting party is also realized, which improves the security.

Preferably, comprising: a storage module, configured to store persistently a first industrial data obtained by the first interaction module from the first industrial field device and a second industrial data obtained by the second interaction module from the second industrial field device, in a memory; a data analysis module, configured to perform data analysis on the first industrial data and the second industrial data in the memory in response to a data analysis request received via the Web server.

Therefore, data storage services and data analysis services are also provided.

In a second aspect, an industrial data integration method is provided. The method comprising:
enabling a first interaction module to interact with a first industrial field device based on a non-standard protocol; managing a life cycle of the first interaction module; discovering a first service provided by the first interaction module, where the first service is related to the interaction between the first interaction module and the first industrial field device.

It can be seen that the embodiment of the present invention realizes an industrial data integration device as a middleware platform in the industrial field, which can discover services provided by industrial field devices based on non-standard protocols, and shields the heterogeneity of industrial field devices. Moreover, online hot update is also realized.

Preferably, comprising: enabling a second interaction module to interact with a second industrial field device based on a standard protocol; managing a life cycle of the second interaction module; discovering a second service provided by the second interaction module, wherein the second service is related to the interaction between the second interaction module and the second industrial field device.

Therefore, the industrial data integration device can also discover the services provided by industrial field devices based on standard protocols.

Preferably, comprising: registering for the first service or the second service; providing registered first service or registered second service via web server. It can be seen that the first service or the second service can be registered and provided through Web server, and the Web server can provide a unified interface for upper business layer.

Preferably, comprising: receiving configuration information of the first interaction module, wherein the configuration information of the first interaction module includes a first description field with a first general data structure and a second description field with a second general data structure, the first description field describing the first service provided by the first interaction module and a third service required by the first interaction module, the second description field describing a basic information of the first interaction module and callback functions related to the life cycle of the first interaction module; determining the first service and the third service by parsing the first description field; determining basic information of the first interaction module and callback functions related to the life cycle of the first interaction module by parsing the second description field; managing the life cycle of the first interaction module by using the basic information of the first interaction module and the callback functions related to the life cycle of the first interaction module; establishing a first mapping relationship between the first service and the third service; initiating a registration process for the first service according to the basic information of the first interaction module and the first mapping relationship. Through the first description field with the first general data structure, the registration process for the first service can be realized, and by the second description field with the second general data structure, the life cycle management for the first interaction module can be realized.

Preferably, comprising: receiving configuration information of the first interaction module, wherein the configuration information of the first interaction module includes a first description field with a first general data structure and a second description field with a second general data structure, the first description field describing the first service provided by the first interaction module and a third service required by the first interaction module, the second description field describing a basic information of the first interaction module and callback functions related to the life cycle of the first interaction module; determining the first service and the third service by parsing the first description field; determining basic information of the first interaction module and callback functions related to the life cycle of the first interaction module by parsing the second description field; managing the life cycle of the first interaction module by using the basic information of the first interaction module and the callback functions related to the life cycle of the first interaction module; establishing a first mapping relationship between the first service and the third service; initiating a registration process for the first service according to the basic information of the first interaction module and the first mapping relationship; receiving configuration information of the second interaction module, wherein the configuration information of the second interaction module includes a third description field with the first general data structure and a fourth description field with the second general data structure, the third description field describing the second service provided by the second interaction module and a fourth service required by the second interaction module, the fourth description field describing a basic information of the second interaction module and callback functions related to the life cycle of the second interaction module; determining the second service and the fourth service by parsing the third description field; determining basic information of the second interaction module and callback functions related to the life cycle of the second interaction module by parsing the fourth description field; managing the life cycle of the second interaction module by using the basic information of the second interaction module and the callback functions related to the life cycle of the second interaction module; establishing a second mapping relationship between the second service and the fourth service; initiating a registration process for the second service according to the basic information of the second interaction module and the second mapping relationship. Therefore, through the first description field with the first general data structure, a unified registration process for the first service and the second service can be realized. Through the second description field with the second general data structure, a unified life cycle management for the first interaction module and the second interaction module can be realized. A unified configuration is realized for industrial field equipment that adopts standard protocols or non-standard protocols.

Preferably, comprising: performing authentication processing on a requesting party requesting access to the registered first service or the registered second service. It can be seen that the authentication processing of the requesting party is also realized, which improves the security.

Preferably, comprising: storing persistently a first industrial data obtained by the first interaction module from the first industrial field device and a second industrial data obtained by the second interaction module from the second industrial field device, in a memory; performing data analysis on the first industrial data and the second industrial data in the memory in response to a data analysis request received via the Web server. Therefore, data storage services and data analysis services are also provided.

In a third aspect, an industrial data integration device is provided. The device comprising a processor and a memory, wherein an application program executable by the processor is stored in the memory for causing the processor to execute an industrial data integration method according to any one of above.

In a fourth aspect, a computer-readable medium comprising computer-readable instructions stored thereon is provided, wherein the computer-readable instructions for executing an industrial data integration method according to any one of above.

### BRIEF DESCRIPTION OF THE DRAWINGS

In order to make technical solutions of examples of the present disclosure clearer, accompanying drawings to be used in description of the examples will be simply introduced hereinafter. Obviously, the accompanying drawings to be described hereinafter are only some examples of the present disclosure. Those skilled in the art may obtain other drawings according to these accompanying drawings without creative labor.
Fig. 1 is a structural diagram of an industrial data integration device according to an embodiment of the present invention.
Fig. 2 is a schematic diagram of an industrial data integration device deployed in a cluster mode according to an embodiment of the present invention.
Fig. 3 is a schematic diagram of an industrial data integration device deployed in a central mode according to an embodiment of the present invention.
Fig. 4 is an exemplary flowchart of a life cycle management and service discovery process according to an embodiment of the present invention.
Fig. 5 is an exemplary flow chart of acquiring device status according to an embodiment of the present invention.
Fig. 6 is a flowchart of an industrial data integration method according to an embodiment of the present invention.
Fig. 7 is a structural diagram of an industrial data integration device with a processor-memory architecture according to an embodiment of the present invention.

### List of reference numbers:

| reference numbers | meanings |
|---|---|
| 100 | industrial data integration device |
| 101 | first interaction module |
| 102 | life cycle management module |
| 103 | service discovery module |
| 104 | second interaction module |
| 105 | service providing module |
| 106 | authentication module |
| 107 | storage module |
| 108 | data analysis module |
| 10 | upper business layer |
| 20 | management node |
| 31;41 | field monitoring node |
| 30 | integration node |
| 29 | industrial data integration device |
| 28 | persistent storage |
| 27 | operating system and basic software |
| 26 | message communication module |
| 25 | web server |
| 24 | storage module |
| 23 | data analysis module |
| 22 | service providing module |
| 21 | authentication module |
| 32 | industrial data integration device |
| 33 | life cycle management module |
| 34 | service discovery module |
| 35 | non-standard field device interaction module |
| 36 | Socket interaction module |
| 37 | Ros interaction module |
| 38 | message communication module |
| 39 | operating system and basic software |
| 42 | industrial data integration device |
| 43 | life cycle management module |
| 44 | service discovery module |
| 45 | OPC UA module |
| 48 | message communication module |
| 49 | operating system and basic software |
| 51 | industrial field device based on non-standard protocol |
| 52 | Socket-based industrial field device |
| 53 | Ros-based industrial field device |
| 54 | RS323/485 based industrial field device |
| 55 | OPC UA-based industrial field device |
| 61 | output data access interface |
| 62 | Socket server |
| 63 | Ros server |
| 64 | industrial data integration device |
| 65 | OPC UA server |
| 641 | RS323/485 module |
| 642 | message communication module |
| 643 | RS323/485 gateway |
| 80 | life cycle management module |
| 81 | service discovery module |
| 82 | non-standard field device connection module |
| 83 | Socket interaction module |
| 85 | Ros interaction module |
| 90 | device based on non-standard protocols |
| 91 | Socket-based device |
| 92 | Ros-based device |
| 93 | output data access interface |
| 94 | Socket server |
| 95 | Ros server |
| 400 | administrator |
| 401-420 | steps |
| 500 | web user |
| 501-522 | steps |
| 600 | industrial data integration method |
| 601-603 | steps |
| 700 | industrial data integration device |
| 701 | processor |
| 702 | memory |

### DETAILED DESCRIPTION

In order to make the technical solutions and advantages of the present invention more comprehensible, the present invention will be further described in detail below with reference to the accompanying drawings and embodiments. It is understood that the specific embodiments described herein are merely illustrative of the present invention and are not intended to limit the scope of the invention.

For the sake of brevity and clarity of the description, the aspects of the present invention are set forth below by describing several representative embodiments. Numerous details in the embodiments are only configured to assist in understanding the aspects of the present invention. However, it is obvious that the technical solution of the present invention can be implemented without being limited to these details. In order to avoid unnecessarily obscuring aspects of the present invention, some embodiments are not described in detail, but only the framework is given. Hereinafter, "including" means "including but not limited to", and "according to" means "at least according to .., but not limited to only based on". Due to the language habit of Chinese, the number of one component is not specifically indicated below, which means that the component may be one or more, or may be understood as at least one.

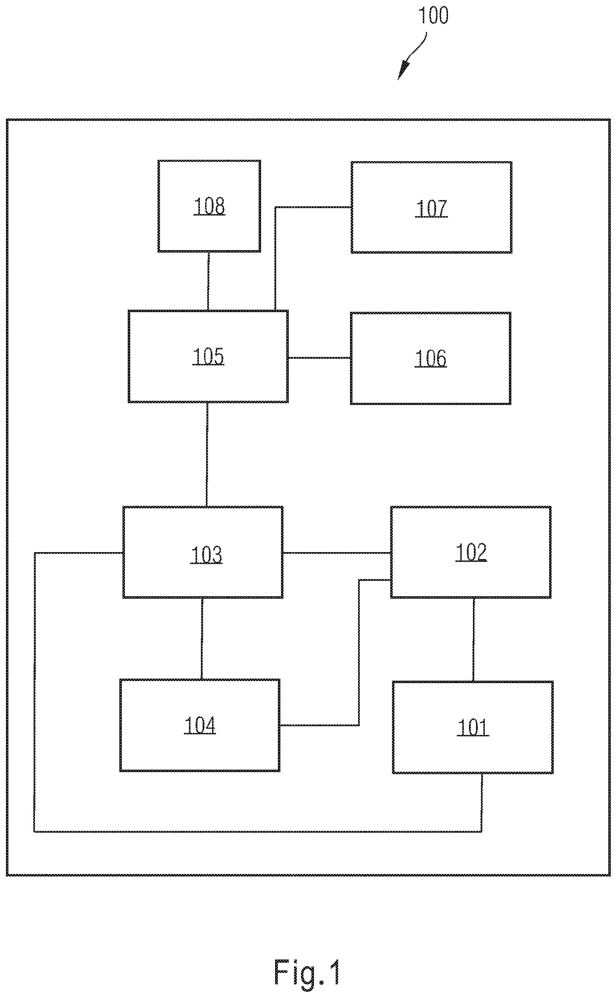

Fig. 1 is a structural diagram of an industrial data integration device according to an embodiment of the present invention.

As shown in FIG. 1, the industrial data integration device 100 includes: a first interaction module 101, which is used to interact with a first industrial field device (not shown in Fig. 1) based on a non-standard protocol; a life cycle management module 102, which is used to manage the life cycle of the first interaction module 101; and a service discovery module 103 is used to discover a first service provided by the first interaction module 101, where the first service is related to the interaction between the first interaction module 101 and the first industrial field device. Here, non-standard protocols are industrial data exchange protocols that do not comply with international standards. It can be seen that the embodiment of the present invention realizes an industrial data integration device as a middleware platform in the industrial field, which can discover services provided by industrial field devices based on non-standard protocols, and shields the heterogeneity of industrial field devices. Moreover, since the service discovery module supports the discovery of the first service provided by the first interaction module, online hot updates are also realized.

In one embodiment, the industrial data integration apparatus 100 may further include: a second interaction module 104, which is used to interact with a second industrial field device based on a standard protocol; wherein the life cycle management module 102 is also used to manage the life cycle of the second interaction module 104. The service discovery module 103 is also used to discover a second service provided by the second interaction module 104, where the second service is related to the interaction between the second interaction module 104 and the second industrial field device. Therefore, the industrial data integration device can also discover the services provided by industrial field devices based on standard protocols. Among them, the standard protocol may include OPC UA protocol, Modbus protocol, Ros protocol or Socket protocol, etc.

The first industrial field device and the second industrial field device can be implemented as Edge devices, PLCs, sensors, actuators, etc., respectively.

In one embodiment, the life cycle management module 102 is configured to receive configuration information of the first interaction module 101, wherein the configuration information of the first interaction module 101 includes a first description field with a first general data structure and a second description field with a second general data structure, the first description field describing the first service provided by the first interaction module 101 and a third service required by the first interaction module 101, the second description field describing a basic information of the first interaction module 101 and callback functions related to the life cycle of the first interaction module 101; determine the first service and the third service by parsing the first description field; determine basic information of the first interaction module 101 and callback functions related to the life cycle of the first interaction module 101 by parsing the second description field; and manage the life cycle of the first interaction module 101 by using the basic information of the first interaction module 101 and the callback functions related to the life cycle of the first interaction module 101; the service discovery module 103 is configured to establish a first mapping relationship between the first service and the third service, and initiate a registration process for the first service according to the basic information of the first interaction module 101 and the first mapping relationship. Through the first description field with the first general data structure, the registration process for the first service can be realized, and by the second description field with the second general data structure, the life cycle management for the first interaction module can be realized.

In one embodiment, wherein the life cycle management module 102 is configured to receive configuration information of the first interaction module 101, wherein the configuration information of the first interaction module 101 includes a first description field with a first general data structure and a second description field with a second general data structure, the first description field describing the first service provided by the first interaction module 101 and a third service required by the first interaction module 101, the second description field describing a basic information of the first interaction module 101 and callback functions related to the life cycle of the first interaction module 101; determine the first service and the third service by parsing the first description field; determine basic information of the first interaction module 101 and callback functions related to the life cycle of the first interaction module 101 by parsing the second description field; and manage the life cycle of the first interaction module 101 by using the basic information of the first interaction module 101 and the callback functions related to the life cycle of the first interaction module 101;the service discovery module 103 is configured to establish a first mapping relationship between the first service and the third service, and initiate a registration process for the first service according to the basic information of the first interaction module 101 and the first mapping relationship. The life cycle management module 102 is configured to receive configuration information of the second interaction module 104, wherein the configuration information of the second interaction module 104 includes a third description field with the first general data structure and a fourth description field with the second general data structure, the third description field describing the second service provided by the second interaction module 104 and a fourth service required by the second interaction module 104, the fourth description field describing a basic information of the second interaction module 104 and callback functions related to the life cycle of the second interaction module 104; determine the second service and the fourth service by parsing the third description field; determine basic information of the second interaction module 104 and callback functions related to the life cycle of the second interaction module 104 by parsing the fourth description field; and manage the life cycle of the second interaction module 104 by using the basic information of the second interaction module 104 and the callback functions related to the life cycle of the second interaction module 104;the service discovery module 103 is configured to establish a second mapping relationship between the second service and the fourth service, and initiate a registration process for the second service according to the basic information of the second interaction module 104 and the second mapping relationship. Therefore, through the first description field with the first general data structure, a unified registration process for the first service and the second service can be realized. Through the second description field with the second general data structure, a unified life cycle management for the first interaction module and the second interaction module can be realized. A unified configuration is realized for industrial field equipment that adopts standard protocols or non-standard protocols.

For example, the first general data structure can be specifically implemented as an XML file format, including the following structure:

```
     <Module>
        <Name>...</Name>
        <Type> ... </Type>
        <ProvidedInterfaces>
          <Interface> ... </Interface>
          <...></...>
        </ProvidedInterfaces>
        <ConsumedInterfaces>
          <Interface> ... </Interface>
          <...></...>
        </ConsumedInterfaces>
        <...>...<...>
     </Module>
```

Among them, the provided services are described in the <ProvidedInterfaces> section, and the required services are described in the <ConsumedInterfaces> section.

The second general data structure can also be specifically implemented as an XML file format, or as an embedded code format, including the following structure:

```
     Module Structure
     {
        name,
        type,
        connected device info,
        Lifecycle reference,
        ...
     }
     Module Lifecycle
     {
        create,
        start,
        execute,
        stop,
        destroy,
        ...
     }
```

Among them, the basic information of the module includes module name (name), module type (type), connected device information (connected device info), and so on. The callback functions related to the life cycle include: create module command (create), start module command (start), execute module command (execute), stop module command (stop) and destroy module command (destroy), etc.

The foregoing exemplarily describes typical examples of the first general data structure and the second general data structure. Those skilled in the art may realize that this description is only exemplary and is not used to limit the protection scope of the embodiments of the present invention.

In one embodiment, the industrial data integration device 100 further includes a service providing module 105 for registering the first service or the second service, and providing the registered first service or the registered second service via Web server. It can be seen that the first service or the second service can be registered, and the registered first service and the registered second service can be provided through the web server, and a web server that provides a unified interface for the upper business layer is realized.

In one embodiment, the industrial data integration device 100 includes an authentication module 106 for performing authentication processing on a requester requesting to access the registered first service or the registered second service. It can be seen that the authentication processing of the requesting party is also realized, and the security is improved.

In one embodiment, the industrial data integration device 100 includes: a storage module 107 for acquiring a first industrial data obtained by the first interaction module 101 from the first industrial field device and a second interaction module 104 from the second industrial field device The second industrial data in the memory is persistently stored in the memory; the data analysis module 108 is configured to perform data analysis on the first industrial data and the second industrial data in the memory in response to a data analysis request received via the Web server. Therefore, data storage services and data analysis services are also provided.

It can be seen that the embodiment of the present invention proposes a modular industrial data integration solution. A middleware platform is implemented for the industrial field, which can connect the underlying industrial field devices (such as Edge, PLC, sensors, actuators, etc.) with the upper business layer. The platform includes basic system-level modules and customized user-level modules. The system-level module provides a runtime environment, which may include a message communication module, a life cycle management module, a service discovery module, and other system modules with specific functions. User-level modules can be customized by users or operators, and are mainly responsible for interacting with the underlying industrial field devices, such as collecting data from the device and sending control commands to the device. For example, there can be a 1:1 mapping relationship between user-level modules and industrial field devices.

The middleware platform provides module abstract lifecycle management interfaces (for example, Create, Start, Stop, Destroy) and abstract service interfaces (Provided Service, Consumed Service). Every user-level module needs to inherit to implement these abstract interfaces. The system-level lifecycle management module can dynamically load and unload custom user-level modules. The service discovery module can automatically discover which services the user-level module provides and consumes. In this way, the platform supports online hot updates and upgrades. Moreover, the middleware platform shields the heterogeneity of the underlying field devices and implements a web server that provides a unified access interface (such as a RESTful API) for the upper business layer. The service discovery module automatically discovers all user services implemented in the user-level module when it dynamically loads the user-level module, and then registers all user services to the Web server. Therefore, the upper business layer will be able to understand all registered user services by accessing the Web server. From the perspective of the upper business layer, there is no need to develop a specific protocol to access the underlying equipment. All data can be obtained from the underlying equipment only by accessing the Web server. This method decouples the upper business layer from the bottom equipment and avoids major changes in the business layer.

For field devices with standard protocols, such as OPC UA and RS232/485 protocols, the platform has implemented local standard modules, which can be enabled only through configuration files according to actual needs. For field devices with proprietary protocols (non-standard protocols), it is necessary to follow the abstract interface specifications of the platform to implement customized modules to interact with field devices. These customized modules can be dynamically loaded into the system without shutting down.

The middleware platform supports two different deployment modes, namely cluster mode and central mode.

In the cluster mode, it includes a management node and one or more field monitoring nodes. The management node mainly includes basic modules such as Web server and back-end service module, and is responsible for interacting with the upper business layer and other field monitoring nodes. The field monitoring node includes some basic modules and user-level modules, which are responsible for executing commands from the management node and interacting with the underlying field devices.

In the central mode, an integration node is included, which is responsible for interacting with the upper business layer and the underlying field devices.

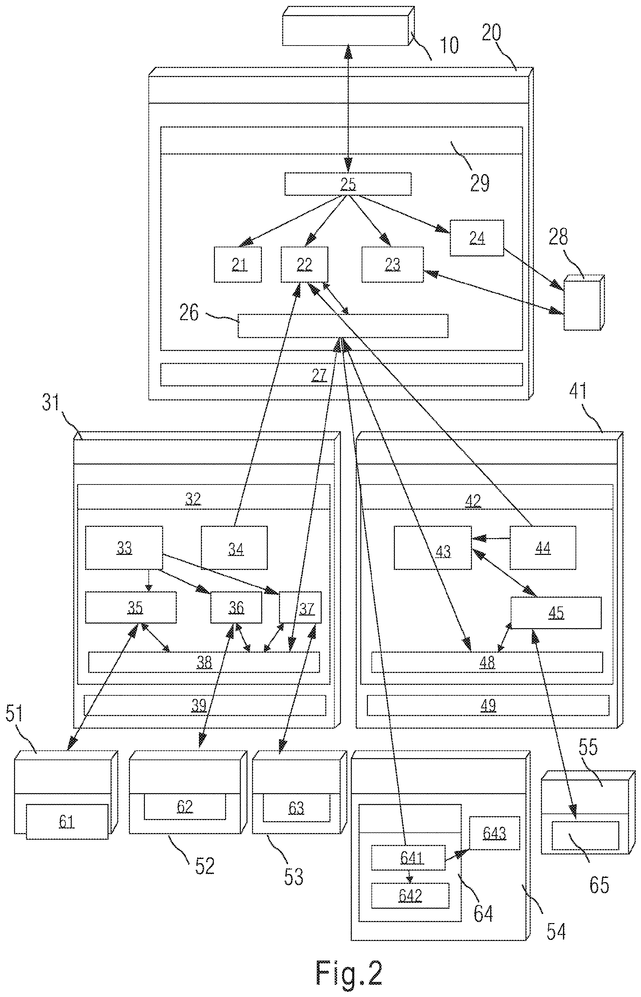

Fig. 2 is a schematic diagram of an industrial data integration device deployed in a cluster mode according to an embodiment of the present invention.

In Figure 2, the middleware platform includes a management node 20 and two field monitoring nodes 31 and 41. The management node 20 includes a web server 25 that provides a RESTful API. The Web server 25 is connected to the upper business layer 10. The management node 20 interacts with the upper business layer 10 and the field monitoring nodes 31 and 41 respectively.

The management node 10 includes an industrial data integration device 29 and an operating system and basic software 27. The industrial data integration device 29 also includes an authentication module 21, a service providing module 22, a data analysis module 23, a storage module 24, and a message communication module 26.

The field monitoring node 31 includes an industrial data integration device 32 and an operating system and basic software 39. The industrial data integration device 32 includes a life cycle management module 33, a service discovery module 34, a non-standard field device interaction module 35, a Socket interaction module 36, a Ros interaction module 37, and a message communication module 38. Among them, the non-standard field device interaction module 35 is connected with an industrial field device 51 based on the non-standard protocol; the Socket interaction module 36 is connected with a Socket-based industrial field device 52; the Ros interaction module 37 is connected with a Ros-based industrial field device 53.

The field monitoring node 41 includes an industrial data integration device 42 and an operating system and basic software 49. The industrial data integration device 42 includes a life cycle management module 43, a service discovery module 44, and an OPC UA module 45. Among them, the OPC UA module 45 is connected to an OPC UA-based industrial field device 55.

The non-standard field device interaction module 35, the Socket interaction module 36, the Ros interaction module 37 and the OPC UA module 45 are all user-level modules.

In an embodiment, a field monitoring node may also be arranged in the field device. For example, an industrial data integration device 64 is arranged in an industrial field device 54 based on RS323/485. The industrial data integration device 64 includes an RS323/485 module 641 and a message communication module 642. The message communication module 642 is connected to the message communication module 26. The device 54 interacts with the management node 20 via the connection between the message communication module 642 and the message communication module 26.

The life cycle management module 33 in the field monitoring node 31 manages the life cycle of the non-standard field device interaction module 35 through a second description field included in the configuration information of the non-standard field device interaction module 35, wherein the second description field contains a second general data structure. Furthermore, the service discovery module 34 in the field monitoring node 31 determines a first service provided by the non-standard field device interaction module 35 via a first description field included in the configuration information of the non-standard field device interaction module 35, wherein the first service is provided by the non-standard field device interaction module 35 and the first description field contains a first general data structure. The first service is based on the interaction data between the non-standard field device interaction module 35 and the output data access interface 61 in the device 51. The service discovery module 34 registers the first service with the service providing module 22. The service providing module 22 provides the registered first service to the upper business layer 10 via the Web server 25.

The life cycle management module 33 in the field monitoring node 31 manages the life cycle of the Socket interaction module 36 through a fourth description field included in the configuration information of the Socket interaction module 36, where the fourth description field contains the second general data structure. Moreover, the service discovery module 34 in the field monitoring node 31 determines a second service provided by the Socket interaction module 36 via a third description field included in the configuration information of the Socket interaction module 36, where the third description field contains the first general data structure. The second service is based on the interaction data between the Socket interaction module 36 and the server 62 in the device 52. The service discovery module 34 registers the second service with the service providing module 22. The service providing module 22 provides the registered second service to the upper business layer 10 via the Web server 25.

Similarly, the upper business layer 10 can access the services provided by the Ros interaction module 37. Similarly, the upper business layer 10 can access the services provided by the OPC UA module 45.

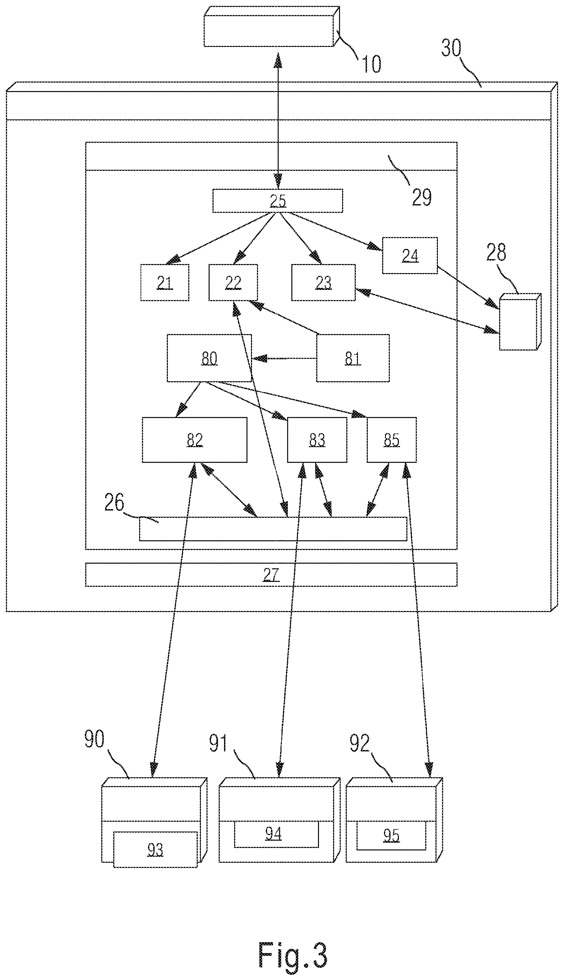

Fig. 3 is a schematic diagram of an industrial data integration device deployed in a central mode according to an embodiment of the present invention.

In FIG. 3, the industrial data integration device is integrated into the integration node 30. The integration node 30 includes an industrial data integration device 29 and an operating system and basic software 27. The industrial data integration device 29 includes a web server 25 that provides a RESTful API. The Web server 25 is connected to the upper business layer 10. The management node 20 interacts with the upper business layer 10 and the integration node 30 respectively.

The data integration device 29 includes: an authentication module 21, a service providing module 22, a data analysis module 23, a storage module 24, and a message communication module 26. The data integration device 29 also includes: a life cycle management module 80, a service discovery module 81, a non-standard field device connection module 82, a Socket interaction module 83, and a Ros interaction module 85. The non-standard field device connection module 82 is connected with a device 90 based on the non-standard protocol; the Socket interaction module 83 is connected with a Socket-based device 91; the Ros interaction module 37 is connected with a Ros-based device 92. The storage module 24 is connected to a persistent storage 28.

The life cycle management module 80 in the data integration device 29 manages the life cycle of the non-standard field device interaction module 82 through a second description field included in the configuration information of the non-standard field device interaction module 82, wherein the second description field contains the second general data structure. Moreover, the service discovery module 81 in the data integration device 29 determines the first service provided by the non-standard field device interaction module 82 via a first description field included in the configuration information of the non-standard field device interaction module 82. The first description field contains the first general data structure. The first service is based on the interaction data between the non-standard field device interaction module 82 and the output data access interface 93 in the device 90. The service discovery module 81 registers the first service with the service providing module 22. The service providing module 22 provides the registered first service to the upper business layer 10 via the Web server 25.

The life cycle management module 80 in the data integration device 29 manages the life cycle of the Socket interaction module 83 through a fourth description field included in the configuration information of the Socket interaction module 83, where the fourth description field contains the second general data structure. Moreover, the service discovery module 81 in the data integration device 29 determines a second service provided by the Socket interaction module 83 via a third description field included in the configuration information of the Socket interaction module 83. The third description field contains the first general data structure. The second service is based on the interaction data between the Socket interaction module 83 and the server 94 in the device 91. The service discovery module 81 registers the second service with the service providing module 22. The service providing module 22 provides the registered second service to the upper business layer 10 via the Web server 25.

Similarly, the upper business layer 10 can access the services provided by the Ros interaction module 85. Among them: the service provided by the Ros interaction module 85 is based on the interaction data between the Ros interaction module 85 and the ROS server 95 in the device 92.

In the embodiment of the present invention, the modular data integration platform supports dynamic loading and unloading of user-level modules. This function depends on the life cycle management module. When the user-level module is dynamically loaded or unloaded from the platform, the system service discovery module will automatically discover all user services implemented in the user-level module, and then register and deregister these user services with the business module.

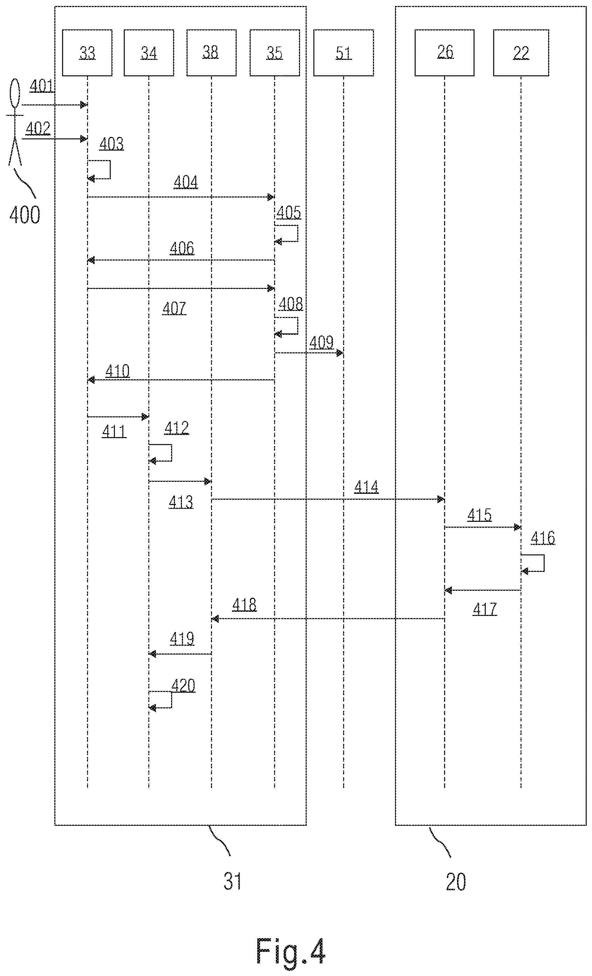

Fig. 4 is an exemplary flowchart of a life cycle management and service discovery process according to an embodiment of the present invention. The method shown in FIG. 4 is applicable to the cluster mode of FIG. 2. The method includes:
Step 401: The administrator 400 sends a request to activate the life cycle management command line interface to the life cycle management module 33 in the field monitoring node 31.
Step 402: The administrator 400 sends a request loading module command to the life cycle management module 33, and provides configuration information in XML format. The configuration information includes the services provided by the non-standard field device interaction module 35 and the services required by the non-standard field device interaction module 35.
Step 403: The life cycle management module 33 parses the configuration information.
Step 404: The life cycle management module 33 provides the analysis result to the non-standard field device interaction module 35, and requests the non-standard field device interaction module 35 to create a module based on the request load module command.
Step 405: The non-standard field device interaction module 35 creates itself based on the analysis result, and initializes itself.
Step 406: The non-standard field device interaction module 35 notifies the life cycle management module 33 of the creation result.
Step 407: The life cycle management module 33 sends a request to run the module to the non-standard field device interaction module 35.
Step 408: The non-standard field device interaction module 35 starts to run.
Step 409: The non-standard field device interaction module 35 connects to the device 51 based on the non-standard protocol.
Step 410: The non-standard field device interaction module 35 notifies the life cycle management module 33 of the module status.
Step 411: The life cycle management module 33 sends the module status and module information to the service discovery module 34.
Step 412: The service discovery module 34 detects its own internal mapping table. The mapping relationship between each user-level module and the existing service is stored in the mapping table. Wherein, when it is found that there is no mapping relationship between the provided service in the configuration information and the module 35 in the mapping table, step 413 is executed.
Step 413: The service discovery module 34 sends a registration message for the service to the message communication module 38. This registered service is based on the interaction between the interaction module 35 and the device 51.
Step 414: The message communication module 38 forwards the registration message to the message communication module 26 in the management node 20.
Step 415: The message communication module 26 forwards the registration message to the service providing module 22.
Step 416: The service providing module 22 registers the service in its internal mapping table.
Step 417: The service providing module 22 notifies the message communication module 26 of the registration result.
Step 418: The message communication module 26 forwards the registration result to the message communication module 38.
Step 419: The message communication module 38 forwards the registration result to the service discovery module 34.
Step 420: The service discovery module 34 updates its own mapping table based on the registration result.

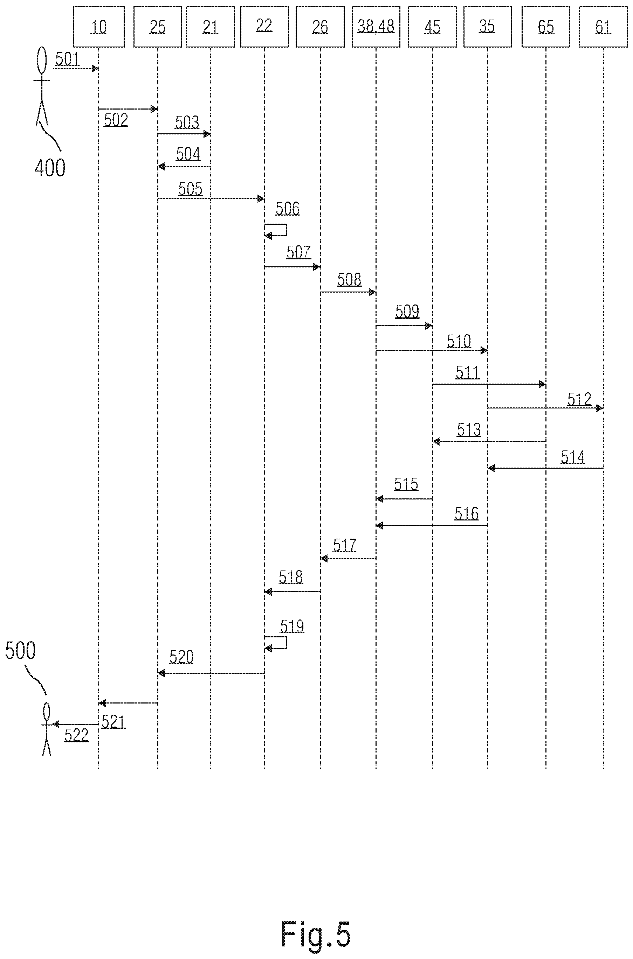

Fig. 5 is an exemplary flow chart of acquiring device status according to an embodiment of the present invention. The method shown in FIG. 5 is applicable to the cluster mode of FIG. 2.

In Figure 5, the method includes:
Step 501: The administrator 400 sends a request to obtain the status of the device 51 and the device 55 to the upper service layer 10.
Step 502: The upper business layer 10 sends an http request for acquiring the status of the device 51 and the device 55 to the Web server 25.
Step 503: The Web server 25 sends an authentication request to the authentication module 21.
Step 504: The authentication module 21 returns the authentication result to the Web server 25.
Step 505: The Web server 25 forwards the http request for acquiring the status of the device 51 and the device 55 to the service providing module 22.
Step 506: The service providing module 22 parses the http request and checks the internal mapping table to find the respective user-level modules connected to the device 55 and the device 51 respectively. Among them, it is found that the device 55 is connected to the OPC UA module 45, and the device 51 is connected to the non-standard field device interaction module 35.
Step 507: The service providing module 22 generates a first request for the non-standard field device interaction module 35 and a second request for the OPC UA module 45, and sends the two requests to the message communication module 26 respectively.
Step 508: The message communication module 26 sends the first request to the message communication module 38, and sends the second request to the message communication module 48.
Step 509: The message communication module 48 sends the second request to the OPC UA module 45.
Step 510: The message communication module 38 sends the first request to the non-standard field device interaction module 35.
Step 511: The OPC UA module 45 accesses the OPC UA server 65 to obtain the working status of the device 55 based on the second request.
Step 512: The non-standard field device interaction module 35 accesses the output data access interface 61 to obtain the working status of the device 51 based on the first request.
Step 513: The OPC UA server 65 sends the working status of the device 55 to the OPC UA module 45.
Step 514: The output data access interface 61 sends the working status of the device 51 to the non-standard field device interaction module 35.
Step 515: The OPC UA module 45 sends the working status of the device 55 to the message communication module 48.
Step 516: The non-standard field device interaction module 35 sends the working status of the device 51 to the message communication module 38.
Step 517: The message communication module 48 sends the working status of the device 55 to the message communication module 26, and the message communication module 38 sends the working status of the device 51 to the message communication module 26.
Step 518: The message communication module 26 sends the working state of the device 51 and the working state of the device 55 to the service providing module 22.
Step 519: The service providing module 22 constructs an http response message including the working status of the device 51 and the working status of the device 55.
Step 520: The service providing module 22 sends the http response message to the Web server 25.
Step 521: The Web server 25 sends the http response message to the upper service layer 10.
Step 522: The web user 500 obtains the http response message from the upper service layer 10, and obtains the working status of the device 51 and the working status of the device 55 from the http response message.

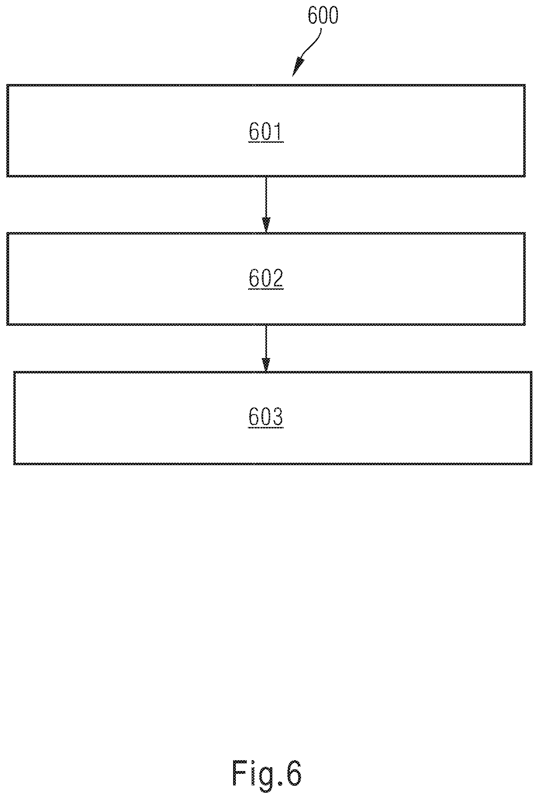

The embodiment of the present invention also proposes an industrial data integration method. Fig. 6 is a flowchart of an industrial data integration method according to an embodiment of the present invention.

As shown in FIG. 6, the industrial data integration method 600 includes:
Step 601: Enable the first interaction module to interact with the first industrial field device based on the non-standard protocol.
Step 602: Manage the life cycle of the first interaction module.
Step 603: Discover the first service provided by the first interaction module, where the first service is related to the interaction between the first interaction module and the first industrial field device.

In one embodiment, the method comprising: enabling a second interaction module to interact with a second industrial field device based on a standard protocol; managing a life cycle of the second interaction module; discovering a second service provided by the second interaction module, wherein the second service is related to the interaction between the second interaction module and the second industrial field device.

In one embodiment, the method comprising: registering for the first service or the second service; providing registered first service or registered second service via web server. It can be seen that the first service or the second service can be registered and provided through Web server, and the Web server can provide a unified interface for upper business layer.

In one embodiment, the method comprising: receiving configuration information of the first interaction module, wherein the configuration information of the first interaction module includes a first description field with a first general data structure and a second description field with a second general data structure, the first description field describing the first service provided by the first interaction module and a third service required by the first interaction module, the second description field describing a basic information of the first interaction module and callback functions related to the life cycle of the first interaction module; determining the first service and the third service by parsing the first description field; determining basic information of the first interaction module and callback functions related to the life cycle of the first interaction module by parsing the second description field; managing the life cycle of the first interaction module by using the basic information of the first interaction module and the callback functions related to the life cycle of the first interaction module; establishing a first mapping relationship between the first service and the third service; initiating a registration process for the first service according to the basic information of the first interaction module and the first mapping relationship. Through the first description field with the first general data structure, the registration process for the first service can be realized, and by the second description field with the second general data structure, the life cycle management for the first interaction module can be realized.

In one embodiment, the method comprising: receiving configuration information of the first interaction module, wherein the configuration information of the first interaction module includes a first description field with a first general data structure and a second description field with a second general data structure, the first description field describing the first service provided by the first interaction module and a third service required by the first interaction module, the second description field describing a basic information of the first interaction module and callback functions related to the life cycle of the first interaction module; determining the first service and the third service by parsing the first description field; determining basic information of the first interaction module and callback functions related to the life cycle of the first interaction module by parsing the second description field; managing the life cycle of the first interaction module by using the basic information of the first interaction module and the callback functions related to the life cycle of the first interaction module; establishing a first mapping relationship between the first service and the third service; initiating a registration process for the first service according to the basic information of the first interaction module and the first mapping relationship; receiving configuration information of the second interaction module, wherein the configuration information of the second interaction module includes a third description field with the first general data structure and a fourth description field with the second general data structure, the third description field describing the second service provided by the second interaction module and a fourth service required by the second interaction module, the fourth description field describing a basic information of the second interaction module and callback functions related to the life cycle of the second interaction module; determining the second service and the fourth service by parsing the third description field; determining basic information of the second interaction module and callback functions related to the life cycle of the second interaction module by parsing the fourth description field; managing the life cycle of the second interaction module by using the basic information of the second interaction module and the callback functions related to the life cycle of the second interaction module; establishing a second mapping relationship between the second service and the fourth service; initiating a registration process for the second service according to the basic information of the second interaction module and the second mapping relationship. Therefore, through the first description field with the first general data structure, a unified registration process for the first service and the second service can be realized. Through the second description field with the second general data structure, a unified life cycle management for the first interaction module and the second interaction module can be realized. A unified configuration is realized for industrial field equipment that adopts standard protocols or non-standard protocols.

In one embodiment, the method comprising: performing authentication processing on a requesting party requesting access to the registered first service or the registered second service. It can be seen that the authentication processing of the requesting party is also realized, which improves the security.

In one embodiment, the method comprising: storing persistently a first industrial data obtained by the first interaction module from the first industrial field device and a second industrial data obtained by the second interaction module from the second industrial field device, in a memory; performing data analysis on the first industrial data and the second industrial data in the memory in response to a data analysis request received via the Web server. Therefore, data storage services and data analysis services are also provided.

In summary, the modular data integration solution proposed by the embodiment of the present invention provides a fast, efficient and low-cost solution to help industrial enterprises quickly collect and integrate data from field devices, and then make correct decisions, at least including the following advantages:
(1) Cost-effectiveness. There is no need to change the existing field devices, only the specific connection module of the field device needs to be customized to interact with the field device. Provide local standard modules to directly exchange data with field devices that support standard protocols.
(2) High scalability. Provide a unified module data structure, life cycle management and service discovery interface, which is convenient for enterprises to customize modules. After the module is customized and implemented, it can be dynamically loaded without restarting the platform. Similarly, if the underlying device is removed or malfunctions, the module can be dynamically uninstalled from the platform.
(3) High safety. Provide secure access methods to protect the platform and field devices. The upper business layer or external applications can only interact with the platform through a unified restful API and OAuth. This method can prevent direct access to the underlying field devices and improve security.
(4) High flexibility. Two different deployment modes are provided, cluster mode and center mode, depending on the scale of the industrial plant.

In the embodiment of the present invention, the user-level module has a unified data structure, life cycle management and service discovery interface. Following local standard module examples, specific modules can be customized and implemented for field devices with less effort. User-level modules inherit and implement a unified life cycle management interface, and the system life cycle management module can call related interfaces at different stages of the module life cycle. It provides a plug and play mode. In addition, the integrated Web server provides restful APIs for external business applications. The back-end function of the Web server can be implemented in the authentication module. When the user-level module is dynamically loaded or unloaded from the platform, the service discovery module discovers all user services implemented in the user-level module, and then registers all services to the service provision module or deregisters all services from the service provision module. Once the http request arrives, the service provider module deserializes the request and converts it into an internal request. Since the service provider module stores all user service registrations, it can send internal requests to the correct user-level module, and then trigger the user-level module to collect data from the underlying field devices or send control commands to the underlying field devices. At the same time, the service providing module serializes the internal response into the http response of the external business application. This method only provides a single point of access to external applications. In addition, the authentication module provides an identity verification and authorization mechanism to prevent unauthorized restful access. In addition, the platform of the embodiment of the present invention is based on a modular architecture, and modules can be enabled or disabled according to actual needs. According to the scale of the industrial plant, the platform can deploy some modules in the management node in a cluster mode, and deploy some modules in the field monitoring node. Or in the central mode, the module is deployed in the all-in-one field monitoring node.

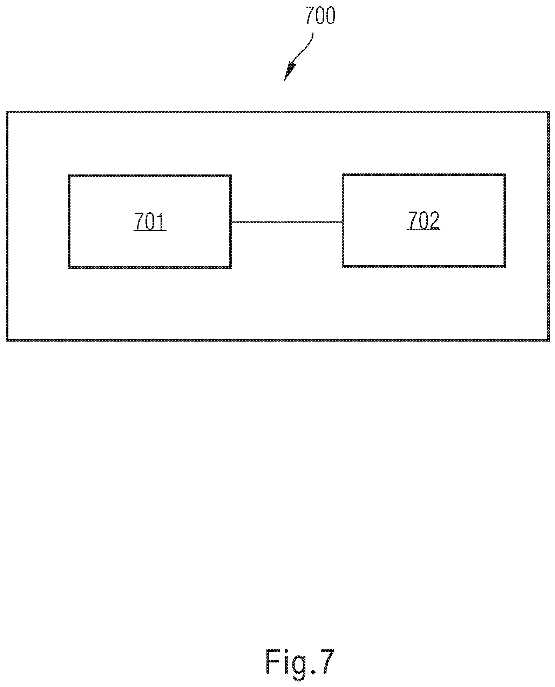

The embodiment of the present invention also proposes an industrial data integration device with a processor-memory architecture. Fig. 7 is a structural diagram of an industrial data integration device with a processor-memory architecture according to an embodiment of the present invention.

As shown in FIG. 7, the industrial data integration device 700 includes a processor 701, a memory 702, and a computer program stored on the memory 702 and running on the processor 701. When the computer program is executed by the processor 701, any of the above industrial data integration methods.

Among them, the memory 702 may be specifically implemented as various storage media such as an electrically erasable programmable read-only memory (EEPROM), a flash memory (Flash memory), and a programmable program read-only memory (PROM). The processor 701 may be implemented to include one or more central processing units or one or more field programmable gate arrays, where the field programmable gate array integrates one or more central processing unit cores. Specifically, the central processing unit or central processing unit core may be implemented as a CPU, MCU, or DSP, and so on.

It should be noted that not all steps and modules in the above-mentioned processes and structural diagrams are necessary, and some steps or modules can be omitted according to actual needs. The order of execution of each step is not fixed and can be adjusted as needed. The division of each module is just to facilitate the description of the functional division. In actual implementation, a module can be implemented by multiple modules, and the functions of multiple modules can also be implemented by the same module. These modules can be located in the same device. It can also be located in a different device.

The hardware modules in each embodiment can be implemented in a mechanical way or an electronic way. For example, a hardware module may include specially designed permanent circuits or logic devices (such as dedicated processors, such as FPGAs or ASICs) to complete specific operations. The hardware module may also include programmable logic devices or circuits temporarily configured by software (for example, including general-purpose processors or other programmable processors) for performing specific operations. As for the specific use of mechanical methods, or the use of dedicated permanent circuits, or the use of temporarily configured circuits (such as software configuration) to implement hardware modules, it can be determined according to cost and time considerations.

The above are only the preferred embodiments of the present invention, and are not used to limit the protection scope of the present invention.

## Claims

1. An industrial data integration device (100), comprising:
a first interaction module (101), configured to interact with a first industrial field device based on a non-standard protocol;
a life cycle management module (102), configured to manage a life cycle of the first interaction module (101);
a service discovery module (103), configured to discover a first service provided by the first interaction module (101), where the first service is related to the interaction between the first interaction module (101) and the first industrial field device;
wherein the life cycle management module (102) is configured to receive configuration information of the first interaction module (101), wherein the configuration information of the first interaction module (101) includes a first description field with a first general data structure and a second description field with a second general data structure, the first description field describing the first service provided by the first interaction module (101) and a third service required by the first interaction module (101), the second description field describing a basic information of the first interaction module (101) and callback functions related to the life cycle of the first interaction module (101); determine the first service and the third service by parsing the first description field; determine basic information of the first interaction module (101) and callback functions related to the life cycle of the first interaction module (101) by parsing the second description field; and manage the life cycle of the first interaction module (101) by using the basic information of the first interaction module (101) and the callback functions related to the life cycle of the first interaction module (101);
the service discovery module (103) is configured to establish a first mapping relationship between the first service and the third service, and initiate a registration process for the first service according to the basic information of the first interaction module (101) and the first mapping relationship.

2. The device (100) according to claim 1, comprising:
a second interaction module (104), configured to interact with a second industrial field device based on a standard protocol;
wherein the life cycle management module (102) is further configured to manage a life cycle of the second interaction module (104); the service discovery module (103) is further configured to discover a second service provided by the second interaction module (104), wherein the second service is related to the interaction between the second interaction module (104) and the second industrial field device;
preferably a service providing module (105), configured to register the first service or the second service, and provide the registered first service or the registered second service via a Web server.

3. The device (100) according to claim 2,
wherein the life cycle management module (102) is configured to receive configuration information of the first interaction module (101), wherein the configuration information of the first interaction module (101) includes a first description field with a first general data structure and a second description field with a second general data structure, the first description field describing the first service provided by the first interaction module (101) and a third service required by the first interaction module (101), the second description field describing a basic information of the first interaction module (101) and callback functions related to the life cycle of the first interaction module (101); determine the first service and the third service by parsing the first description field; determine basic information of the first interaction module (101) and callback functions related to the life cycle of the first interaction module (101) by parsing the second description field; and manage the life cycle of the first interaction module (101) by using the basic information of the first interaction module (101) and the callback functions related to the life cycle of the first interaction module (101);the service discovery module (103) is configured to establish a first mapping relationship between the first service and the third service, and initiate a registration process for the first service according to the basic information of the first interaction module (101) and the first mapping relationship;
wherein the life cycle management module (102) is configured to receive configuration information of the second interaction module (104), wherein the configuration information of the second interaction module (104) includes a third description field with the first general data structure and a fourth description field with the second general data structure, the third description field describing the second service provided by the second interaction module (104) and a fourth service required by the second interaction module (104), the fourth description field describing a basic information of the second interaction module (104) and callback functions related to the life cycle of the second interaction module (104); determine the second service and the fourth service by parsing the third description field; determine basic information of the second interaction module (104) and callback functions related to the life cycle of the second interaction module (104) by parsing the fourth description field; and manage the life cycle of the second interaction module (104) by using the basic information of the second interaction module (104) and the callback functions related to the life cycle of the second interaction module (104);the service discovery module (103) is configured to establish a second mapping relationship between the second service and the fourth service, and initiate a registration process for the second service according to the basic information of the second interaction module (104) and the second mapping relationship.

4. The device (100) according to claim 2, comprising:
an authentication module (106), configured to perform authentication processing on a requesting party requesting access to the registered first service or the registered second service.

5. The device (100) according to claim 2, comprising:
a storage module (107), configured to store persistently a first industrial data obtained by the first interaction module (101) from the first industrial field device and a second industrial data obtained by the second interaction module (104) from the second industrial field device, in a memory;
a data analysis module (108), configured to perform data analysis on the first industrial data and the second industrial data in the memory in response to a data analysis request received via the Web server.

6. An industrial data integration method (600), comprising:
enabling a first interaction module to interact with a first industrial field device based on a non-standard protocol (601);
managing a life cycle of the first interaction module (602);
discovering a first service provided by the first interaction module, where the first service is related to the interaction between the first interaction module and the first industrial field device (603);
the method further comprising:
receiving configuration information of the first interaction module, wherein the configuration information of the first interaction module includes a first description field with a first general data structure and a second description field with a second general data structure, the first description field describing the first service provided by the first interaction module and a third service required by the first interaction module, the second description field describing a basic information of the first interaction module and callback functions related to the life cycle of the first interaction module;
determining the first service and the third service by parsing the first description field;
determining basic information of the first interaction module and callback functions related to the life cycle of the first interaction module by parsing the second description field;
managing the life cycle of the first interaction module by using the basic information of the first interaction module and the callback functions related to the life cycle of the first interaction module;
establishing a first mapping relationship between the first service and the third service;
initiating a registration process for the first service according to the basic information of the first interaction module and the first mapping relationship.

7. The method (600) according to claim 6, comprising:
enabling a second interaction module to interact with a second industrial field device based on a standard protocol;
managing a life cycle of the second interaction module;
discovering a second service provided by the second interaction module, wherein the second service is related to the interaction between the second interaction module and the second industrial field device.

8. The method (600) according to claim 6 or 7, comprising:
registering for the first service or the second service;
providing registered first service or registered second service via web server.

9. The method (600) according to claim 7, comprising:
receiving configuration information of the first interaction module, wherein the configuration information of the first interaction module includes a first description field with a first general data structure and a second description field with a second general data structure, the first description field describing the first service provided by the first interaction module and a third service required by the first interaction module, the second description field describing a basic information of the first interaction module and callback functions related to the life cycle of the first interaction module;
determining the first service and the third service by parsing the first description field;
determining basic information of the first interaction module and callback functions related to the life cycle of the first interaction module by parsing the second description field;
managing the life cycle of the first interaction module by using the basic information of the first interaction module and the callback functions related to the life cycle of the first interaction module;
establishing a first mapping relationship between the first service and the third service;
initiating a registration process for the first service according to the basic information of the first interaction module and the first mapping relationship;
receiving configuration information of the second interaction module, wherein the configuration information of the second interaction module includes a third description field with the first general data structure and a fourth description field with the second general data structure, the third description field describing the second service provided by the second interaction module and a fourth service required by the second interaction module, the fourth description field describing a basic information of the second interaction module and callback functions related to the life cycle of the second interaction module;
determining the second service and the fourth service by parsing the third description field;
determining basic information of the second interaction module and callback functions related to the life cycle of the second interaction module by parsing the fourth description field;
managing the life cycle of the second interaction module by using the basic information of the second interaction module and the callback functions related to the life cycle of the second interaction module;
establishing a second mapping relationship between the second service and the fourth service,
initiating a registration process for the second service according to the basic information of the second interaction module and the second mapping relationship.

10. The method (600) according to claim 8, comprising:
performing authentication processing on a requesting party requesting access to the registered first service or the registered second service.

11. The method (600) according to claim 8, comprising:
storing persistently a first industrial data obtained by the first interaction module from the first industrial field device and a second industrial data obtained by the second interaction module from the second industrial field device, in a memory;
performing data analysis on the first industrial data and the second industrial data in the memory in response to a data analysis request received via the Web server.

12. A computer-readable medium comprising computer-readable instructions stored thereon, wherein the computer-readable instructions for executing an industrial data integration method (600) according to any one of claims 6 to 11.

## Patentansprüche

1. Industrielle Datenintegrationsvorrichtung (100), umfassend:
ein erstes Interaktionsmodul (101), das dazu ausgelegt ist, mit einer ersten industriellen Feldvorrichtung basierend auf einem Nicht-Standardprotokoll zu interagieren;
ein Lebenszyklusverwaltungsmodul (102), das dazu ausgelegt ist, einen Lebenszyklus des ersten Interaktionsmoduls (101) zu verwalten;
ein Dienstentdeckungsmodul (103), das dazu ausgelegt ist, einen ersten Dienst, der durch das erste Interaktionsmodul (101) bereitgestellt wird, zu entdecken, wobei der erste Dienst mit der Interaktion zwischen dem ersten Interaktionsmodul (101) und der ersten industriellen Feldvorrichtung in Zusammenhang steht;
wobei das Lebenszyklusverwaltungsmodul (102) dazu ausgelegt ist, Konfigurationsinformationen des ersten Interaktionsmoduls (101) zu empfangen, wobei die Konfigurationsinformationen des ersten Interaktionsmoduls (101) ein erstes Beschreibungsfeld mit einer ersten allgemeinen Datenstruktur und ein zweites Beschreibungsfeld mit einer zweiten allgemeinen Datenstruktur beinhalten, wobei das erste Beschreibungsfeld den durch das erste Interaktionsmodul (101) bereitgestellten ersten Dienst und einen durch das erste Interaktionsmodul (101) benötigten dritten Dienst beschreibt, wobei das zweite Beschreibungsfeld eine Basisinformation des ersten Interaktionsmoduls (101) und Rückruffunktionen in Bezug auf den Lebenszyklus des ersten Interaktionsmoduls (101) beschreibt; den ersten Dienst und den dritten Dienst durch Parsen des ersten Beschreibungsfelds zu bestimmen; Basisinformationen des ersten Interaktionsmoduls (101) und Rückruffunktionen in Bezug auf den Lebenszyklus des ersten Interaktionsmoduls (101) durch Parsen des zweiten Beschreibungsfelds zu bestimmen; und den Lebenszyklus des ersten Interaktionsmoduls (101) unter Verwendung der Basisinformationen des ersten Interaktionsmoduls (101) und der Rückruffunktionen in Bezug auf den Lebenszyklus des ersten Interaktionsmoduls (101) zu verwalten;
wobei das Dienstentdeckungsmodul (103) ist dazu ausgelegt, eine erste Abbildungsbeziehung zwischen dem ersten Dienst und dem dritten Dienst herzustellen und einen Registrierungsprozess für den ersten Dienst gemäß den Basisinformationen des ersten Interaktionsmoduls (101) und der ersten Abbildungsbeziehung zu initiieren.

2. Vorrichtung (100) nach Anspruch 1, umfassend:
ein zweites Interaktionsmodul (104), das dazu ausgelegt ist, mit einer zweiten industriellen Feldvorrichtung basierend auf einem Standardprotokoll zu interagieren;
wobei das Lebenszyklusverwaltungsmodul (102) ferner dazu ausgelegt ist, einen Lebenszyklus des zweiten Interaktionsmoduls (104) zu verwalten; das Dienstentdeckungsmodul (103) ferner dazu ausgelegt ist, einen zweiten Dienst zu entdecken, der durch das zweite Interaktionsmodul (104) bereitgestellt wird, wobei der zweite Dienst mit der Interaktion zwischen dem zweiten Interaktionsmodul (104) und der zweiten industriellen Feldvorrichtung in Zusammenhang steht;
vorzugsweise ein Dienstbereitstellungsmodul (105), das dazu ausgelegt ist, den ersten Dienst oder den zweiten Dienst zu registrieren und den registrierten ersten Dienst oder den registrierten zweiten Dienst über einen Webserver bereitzustellen.

3. Vorrichtung (100) nach Anspruch 2,
wobei das Lebenszyklusverwaltungsmodul (102) dazu ausgelegt ist, Konfigurationsinformationen des ersten Interaktionsmoduls (101) zu empfangen, wobei die Konfigurationsinformationen des ersten Interaktionsmoduls (101) ein erstes Beschreibungsfeld mit einer ersten allgemeinen Datenstruktur und ein zweites Beschreibungsfeld mit einer zweiten allgemeinen Datenstruktur beinhalten, wobei das erste Beschreibungsfeld den durch das erste Interaktionsmodul (101) bereitgestellten ersten Dienst und einen durch das erste Interaktionsmodul (101) benötigten dritten Dienst beschreibt, wobei das zweite Beschreibungsfeld eine Basisinformation des ersten Interaktionsmoduls (101) und Rückruffunktionen in Bezug auf den Lebenszyklus des ersten Interaktionsmoduls (101) beschreibt; den ersten Dienst und den dritten Dienst durch Parsen des ersten Beschreibungsfelds zu bestimmen; Basisinformationen des ersten Interaktionsmoduls (101) und Rückruffunktionen in Bezug auf den Lebenszyklus des ersten Interaktionsmoduls (101) durch Parsen des zweiten Beschreibungsfelds zu bestimmen; und den Lebenszyklus des ersten Interaktionsmoduls (101) unter Verwendung der Basisinformationen des ersten Interaktionsmoduls (101) und der Rückruffunktionen in Bezug auf den Lebenszyklus des ersten Interaktionsmoduls (101) zu verwalten; das Dienstentdeckungsmodul (103) ist dazu ausgelegt, eine erste Abbildungsbeziehung zwischen dem ersten Dienst und dem dritten Dienst herzustellen und einen Registrierungsprozess für den ersten Dienst gemäß den Basisinformationen des ersten Interaktionsmoduls (101) und der ersten Abbildungsbeziehung zu initiieren;
wobei das Lebenszyklusverwaltungsmodul (102) dazu ausgelegt ist, Konfigurationsinformationen des zweiten Interaktionsmoduls (104) zu empfangen, wobei die Konfigurationsinformationen des zweiten Interaktionsmoduls (104) ein drittes Beschreibungsfeld mit der ersten allgemeinen Datenstruktur und ein viertes Beschreibungsfeld mit der zweiten allgemeinen Datenstruktur beinhalten, wobei das dritte Beschreibungsfeld den durch das zweite Interaktionsmodul (104) bereitgestellten zweiten Dienst und einen durch das zweite Interaktionsmodul (104) benötigten vierten Dienst beschreibt, wobei das vierte Beschreibungsfeld eine Basisinformation des zweiten Interaktionsmoduls (104) und Rückruffunktionen in Bezug auf den Lebenszyklus des zweiten Interaktionsmoduls (104) beschreibt; den zweiten Dienst und den vierten Dienst durch Parsen des dritten Beschreibungsfelds zu bestimmen; Basisinformationen des zweiten Interaktionsmoduls (104) und Rückruffunktionen in Bezug auf den Lebenszyklus des zweiten Interaktionsmoduls (104) durch Parsen des vierten Beschreibungsfelds zu bestimmen; und den Lebenszyklus des zweiten Interaktionsmoduls (104) unter Verwendung der Basisinformationen des zweiten Interaktionsmoduls (104) und der Rückruffunktionen in Bezug auf den Lebenszyklus des zweiten Interaktionsmoduls (104) zu verwalten; das Dienstentdeckungsmodul (103) ist dazu ausgelegt, eine zweite Abbildungsbeziehung zwischen dem zweiten Dienst und dem vierten Dienst herzustellen und einen Registrierungsprozess für den zweiten Dienst gemäß den Basisinformationen des zweiten Interaktionsmoduls (104) und der zweiten Abbildungsbeziehung zu initiieren.

4. Vorrichtung (100) nach Anspruch 2, umfassend:
ein Authentifizierungsmodul (106), das dazu ausgelegt ist, eine Authentifizierungsverarbeitung an einer anfordernden Partei durchzuführen, die Zugriff auf den registrierten ersten Dienst oder den registrierten zweiten Dienst anfordert.

5. Vorrichtung (100) nach Anspruch 2, umfassend:
ein Speichermodul (107), das dazu ausgelegt ist, dauerhaft erste industrielle Daten, die durch das erste Interaktionsmodul (101) von der ersten industriellen Feldvorrichtung erhalten werden, und zweite industrielle Daten, die durch das zweite Interaktionsmodul (104) von der zweiten industriellen Feldvorrichtung erhalten werden, in einem Speicher zu speichern;
ein Datenanalysemodul (108), das dazu ausgelegt ist, eine Datenanalyse an den ersten industriellen Daten und den zweiten industriellen Daten in dem Speicher als Reaktion auf eine Datenanalyseanforderung durchzuführen, die über den Webserver empfangen wird.

6. Industrielles Datenintegrationsverfahren (600), umfassend:
Ermöglichen eines ersten Interaktionsmoduls zum Interagieren mit einer ersten industriellen Feldvorrichtung basierend auf einem Nicht-Standardprotokoll (601);
Verwalten eines Lebenszyklus des ersten Interaktionsmoduls (602);
Entdecken eines ersten Dienstes, der durch das erste Interaktionsmodul bereitgestellt wird, wobei sich der erste Dienst auf die Interaktion zwischen dem ersten Interaktionsmodul und der ersten industriellen Feldvorrichtung bezieht (603);
wobei das Verfahren ferner Folgendes umfasst:
Empfangen von Konfigurationsinformationen des ersten Interaktionsmoduls, wobei die Konfigurationsinformationen des ersten Interaktionsmoduls ein erstes Beschreibungsfeld mit einer ersten allgemeinen Datenstruktur und ein zweites Beschreibungsfeld mit einer zweiten allgemeinen Datenstruktur beinhalten, wobei das erste Beschreibungsfeld den durch das erste Interaktionsmodul bereitgestellten ersten Dienst und einen durch das erste Interaktionsmodul benötigten dritten Dienst beschreibt, wobei das zweite Beschreibungsfeld Basisinformationen des ersten Interaktionsmoduls und Rückruffunktionen in Bezug auf den Lebenszyklus des ersten Interaktionsmoduls beschreibt;
Bestimmen des ersten Dienstes und des dritten Dienstes durch Parsen des ersten Beschreibungsfelds;
Bestimmen von Basisinformationen des ersten Interaktionsmoduls und Rückruffunktionen in Bezug auf den Lebenszyklus des ersten Interaktionsmoduls durch Parsen des zweiten Beschreibungsfelds;
Verwalten des Lebenszyklus des ersten Interaktionsmoduls unter Verwendung der Basisinformationen des ersten Interaktionsmoduls und der Rückruffunktionen in Bezug auf den Lebenszyklus des ersten Interaktionsmoduls;
Herstellen einer ersten Abbildungsbeziehung zwischen dem ersten Dienst und dem dritten Dienst;
Initiieren eines Registrierungsprozesses für den ersten Dienst gemäß den Basisinformationen des ersten Interaktionsmoduls und der ersten Abbildungsbeziehung.

7. Verfahren (600) nach Anspruch 6, umfassend:
Ermöglichen eines zweiten Interaktionsmoduls zum Interagieren mit einer zweiten industriellen Feldvorrichtung basierend auf einem Standardprotokoll;
Verwalten eines Lebenszyklus des zweiten Interaktionsmoduls;
Entdecken eines zweiten Dienstes, der durch das zweite Interaktionsmodul bereitgestellt wird, wobei sich der zweite Dienst auf die Interaktion zwischen dem zweiten Interaktionsmodul und der zweiten industriellen Feldvorrichtung bezieht.

8. Verfahren (600) nach Anspruch 6 oder 7, umfassend:
Registrieren für den ersten Dienst oder den zweiten Dienst;
Bereitstellen eines registrierten ersten Dienstes oder eines registrierten zweiten Dienstes über einen Webserver.

9. Verfahren (600) nach Anspruch 7, umfassend:
Empfangen von Konfigurationsinformationen des ersten Interaktionsmoduls, wobei die Konfigurationsinformationen des ersten Interaktionsmoduls ein erstes Beschreibungsfeld mit einer ersten allgemeinen Datenstruktur und ein zweites Beschreibungsfeld mit einer zweiten allgemeinen Datenstruktur beinhalten, wobei das erste Beschreibungsfeld den durch das erste Interaktionsmodul bereitgestellten ersten Dienst und einen durch das erste Interaktionsmodul benötigten dritten Dienst beschreibt, wobei das zweite Beschreibungsfeld Basisinformationen des ersten Interaktionsmoduls und Rückruffunktionen in Bezug auf den Lebenszyklus des ersten Interaktionsmoduls beschreibt;
Bestimmen des ersten Dienstes und des dritten Dienstes durch Parsen des ersten Beschreibungsfelds;
Bestimmen von Basisinformationen des ersten Interaktionsmoduls und Rückruffunktionen in Bezug auf den Lebenszyklus des ersten Interaktionsmoduls durch Parsen des zweiten Beschreibungsfelds;
Verwalten des Lebenszyklus des ersten Interaktionsmoduls unter Verwendung der Basisinformationen des ersten Interaktionsmoduls und der Rückruffunktionen in Bezug auf den Lebenszyklus des ersten Interaktionsmoduls;
Herstellen einer ersten Abbildungsbeziehung zwischen dem ersten Dienst und dem dritten Dienst;
Initiieren eines Registrierungsprozesses für den ersten Dienst gemäß den Basisinformationen des ersten Interaktionsmoduls und der ersten Abbildungsbeziehung;
Empfangen von Konfigurationsinformationen des zweiten Interaktionsmoduls, wobei die Konfigurationsinformationen des zweiten Interaktionsmoduls ein drittes Beschreibungsfeld mit der ersten allgemeinen Datenstruktur und ein viertes Beschreibungsfeld mit der zweiten allgemeinen Datenstruktur beinhalten, wobei das dritte Beschreibungsfeld den durch das zweite Interaktionsmodul bereitgestellten zweiten Dienst und einen durch das zweite Interaktionsmodul benötigten vierten Dienst beschreibt, wobei das vierte Beschreibungsfeld eine Basisinformation des zweiten Interaktionsmoduls und Rückruffunktionen in Bezug auf den Lebenszyklus des zweiten Interaktionsmoduls beschreibt;
Bestimmen des zweiten Dienstes und des vierten Dienstes durch Parsen des dritten Beschreibungsfelds;
Bestimmen von Basisinformationen des zweiten Interaktionsmoduls und Rückruffunktionen in Bezug auf den Lebenszyklus des zweiten Interaktionsmoduls durch Parsen des vierten Beschreibungsfelds;
Verwalten des Lebenszyklus des zweiten Interaktionsmoduls durch Verwenden der Basisinformationen des zweiten Interaktionsmoduls und der Rückruffunktionen in Bezug auf den Lebenszyklus des zweiten Interaktionsmoduls;
Herstellen einer zweiten Abbildungsbeziehung zwischen dem zweiten Dienst und dem vierten Dienst,
Initiieren eines Registrierungsprozesses für den zweiten Dienst gemäß den Basisinformationen des zweiten Interaktionsmoduls und der zweiten Abbildungsbeziehung.

10. Verfahren (600) nach Anspruch 8, umfassend:
Durchführen einer Authentifizierungsverarbeitung an einer anfordernden Partei, die Zugriff auf den registrierten ersten Dienst oder den registrierten zweiten Dienst anfordert.

11. Verfahren (600) nach Anspruch 8, umfassend:
dauerhaftes Speichern erster industrieller Daten, die durch das erste Interaktionsmodul von der ersten industriellen Feldvorrichtung erhalten werden, und zweiter industrieller Daten, die durch das zweite Interaktionsmodul von der zweiten industriellen Feldvorrichtung erhalten werden, in einem Speicher;
Durchführen einer Datenanalyse an den ersten industriellen Daten und den zweiten industriellen Daten in dem Speicher als Reaktion auf eine Datenanalyseanforderung, die über den Webserver empfangen wird.

12. Computerlesbares Medium, das darauf gespeicherte computerlesbare Anweisungen umfasst, wobei die computerlesbaren Anweisungen zur Ausführung eines industriellen Datenintegrationsverfahrens (600) nach einem der Ansprüche 6 bis 11 dienen.

## Revendications

1. Dispositif (100) d'intégration de données industrielles, comprenant :
un premier module (101) d'interaction, configuré pour interagir avec un premier dispositif industriel de terrain sur la base d'un protocole non standard ;
un module (102) de gestion de cycle de vie, configuré pour gérer un cycle de vie du premier module (101) d'interaction ;
un module (103) de découverte de service, configuré pour découvrir un premier service fourni par le premier module (101) d'interaction, le premier service étant lié à l'interaction entre le premier module (101) d'interaction et le premier dispositif industriel de terrain ;
le module (102) de gestion de cycle de vie étant configuré pour recevoir des informations de configuration du premier module (101) d'interaction, les informations de configuration du premier module (101) d'interaction incluant un premier champ de description avec une première structure générale de données et un deuxième champ de description avec une deuxième structure générale de données, le premier champ de description décrivant le premier service fourni par le premier module (101) d'interaction et un troisième service requis par le premier module (101) d'interaction, le deuxième champ de description décrivant une information de base du premier module (101) d'interaction et des fonctions de rappel liées au cycle de vie du premier module (101) d'interaction ; déterminer le premier service et le troisième service en analysant le premier champ de description ; déterminer des informations de base du premier module (101) d'interaction et des fonctions de rappel liées au cycle de vie du premier module (101) d'interaction en analysant le deuxième champ de description ; et gérer le cycle de vie du premier module (101) d'interaction en utilisant les informations de base du premier module (101) d'interaction et les fonctions de rappel liées au cycle de vie du premier module (101) d'interaction ;
le module (103) de découverte de service étant configuré pour établir une première relation de mappage entre le premier service et le troisième service, et lancer un processus d'inscription pour le premier service selon les informations de base du premier module (101) d'interaction et la première relation de mappage.

2. Dispositif (100) selon la revendication 1 comprenant :
un deuxième module (104) d'interaction configuré pour interagir avec un deuxième dispositif industriel de terrain sur la base d'un protocole standard ;
le module (102) de gestion de cycle de vie étant en outre configuré pour gérer un cycle de vie du deuxième module (104) d'interaction ; le module (103) de découverte de service étant en outre configuré pour découvrir un deuxième service fourni par le deuxième module (104) d'interaction, le deuxième service étant lié à l'interaction entre le deuxième module (104) d'interaction et le deuxième dispositif industriel de terrain ;
de préférence, un module (105) de fourniture de service, configuré pour inscrire le premier service ou le deuxième service, et fournir le premier service inscrit ou le deuxième service inscrit via un serveur Web.

3. Dispositif (100) selon la revendication 2,
le module (102) de gestion de cycle de vie étant configuré pour recevoir des informations de configuration du premier module (101) d'interaction, les informations de configuration du premier module (101) d'interaction incluant un premier champ de description avec une première structure générale de données et un deuxième champ de description avec une deuxième structure générale de données, le premier champ de description décrivant le premier service fourni par le premier module (101) d'interaction et un troisième service requis par le premier module (101) d'interaction, le deuxième champ de description décrivant une information de base du premier module (101) d'interaction et des fonctions de rappel liées au cycle de vie du premier module (101) d'interaction ; déterminer le premier service et le troisième service en analysant le premier champ de description ; déterminer des informations de base du premier module (101) d'interaction et des fonctions de rappel liées au cycle de vie du premier module (101) d'interaction en analysant le deuxième champ de description ; et gérer le cycle de vie du premier module (101) d'interaction en utilisant les informations de base du premier module (101) d'interaction et les fonctions de rappel liées au cycle de vie du premier module (101) d'interaction ; le module (103) de découverte de service étant configuré pour établir une première relation de mappage entre le premier service et le troisième service, et lancer un processus d'inscription pour le premier service selon les informations de base du premier module (101) d'interaction et la première relation de mappage ;
le module (102) de gestion de cycle de vie étant configuré pour recevoir des informations de configuration du deuxième module (104) d'interaction, les informations de configuration du deuxième module (104) d'interaction comportant un troisième champ de description avec la première structure générale de données et un quatrième champ de description avec la deuxième structure générale de données, le troisième champ de description décrivant le deuxième service fourni par le deuxième module (104) d'interaction et un quatrième service requis par le deuxième module (104) d'interaction, le quatrième champ de description décrivant une information de base du deuxième module (104) d'interaction et des fonctions de rappel liées au cycle de vie du deuxième module (104) d'interaction ; déterminer le deuxième service et le quatrième service en analysant le troisième champ de description ; déterminer des informations de base du deuxième module (104) d'interaction et des fonctions de rappel liées au cycle de vie du deuxième module (104) d'interaction en analysant le quatrième champ de description ; et gérer le cycle de vie du deuxième module (104) d'interaction en utilisant les informations de base du deuxième module (104) d'interaction et les fonctions de rappel liées au cycle de vie du deuxième module (104) d'interaction ; le module (103) de découverte de service étant configuré pour établir une deuxième relation de mappage entre le deuxième service et le quatrième service, et lancer un processus d'inscription pour le deuxième service selon les informations de base du deuxième module (104) d'interaction et la deuxième relation de mappage.

4. Dispositif (100) selon la revendication 2 comprenant :
un module (106) d'authentification configuré pour effectuer un traitement d'authentification sur un demandeur demandant l'accès au premier service inscrit ou au deuxième service inscrit.

5. Dispositif (100) selon la revendication 2 comprenant :
un module (107) de stockage, configuré pour stocker de manière persistante une première donnée industrielle obtenue par le premier module (101) d'interaction du premier dispositif industriel de terrain et une deuxième donnée industrielle obtenue par le deuxième module (104) d'interaction du deuxième dispositif industriel de terrain, dans une mémoire ;
un module (108) d'analyse de données, configuré pour effectuer une analyse de données sur la première donnée industrielle et la deuxième donnée industrielle dans la mémoire en réponse à une demande d'analyse de données reçue via le serveur Web.

6. Procédé (600) d'intégration de données industrielles, comprenant :
le fait de permettre à un premier module d'interaction d'interagir avec un premier dispositif industriel de terrain sur la base d'un protocole non standard (601) ;
la gestion d'un cycle de vie du premier module d'interaction (602) ;
la découverte d'un premier service fourni par le premier module d'interaction, le premier service étant lié à l'interaction entre le premier module d'interaction et le premier dispositif industriel de terrain (603) ;
le procédé comprenant en outre :
la réception d'informations de configuration du premier module d'interaction, les informations de configuration du premier module d'interaction incluant un premier champ de description avec une première structure générale de données et un deuxième champ de description avec une deuxième structure générale de données, le premier champ de description décrivant le premier service fourni par le premier module d'interaction et un troisième service requis par le premier module d'interaction, le deuxième champ de description décrivant une information de base du premier module d'interaction et des fonctions de rappel liées au cycle de vie du premier module d'interaction ;
la détermination du premier service et du troisième service en analysant le premier champ de description ;
la détermination d'informations de base du premier module d'interaction et de fonctions de rappel liées au cycle de vie du premier module d'interaction en analysant le deuxième champ de description ;
la gestion du cycle de vie du premier module d'interaction en utilisant les informations de base du premier module d'interaction et les fonctions de rappel liées au cycle de vie du premier module d'interaction ;
l'établissement d'une première relation de mappage entre le premier service et le troisième service ;
le lancement d'un processus d'inscription pour le premier service selon les informations de base du premier module d'interaction et la première relation de mappage.

7. Procédé (600) selon la revendication 6, comprenant :
le fait de permettre à un deuxième module d'interaction d'interagir avec un deuxième dispositif industriel de terrain sur la base d'un protocole standard ;
la gestion d'un cycle de vie du deuxième module d'interaction ;
la découverte d'un deuxième service fourni par le deuxième module d'interaction, le deuxième service étant lié à l'interaction entre le deuxième module d'interaction et le deuxième dispositif industriel de terrain.

8. Procédé (600) selon la revendication 6 ou 7, comprenant :
l'inscription au premier service ou au deuxième service ;
la fourniture d'un premier service inscrit ou d'un deuxième service inscrit par l'intermédiaire d'un serveur web.

9. Procédé (600) selon la revendication 7, comprenant :
la réception d'informations de configuration du premier module d'interaction, les informations de configuration du premier module d'interaction incluant un premier champ de description avec une première structure générale de données et un deuxième champ de description avec une deuxième structure générale de données, le premier champ de description décrivant le premier service fourni par le premier module d'interaction et un troisième service requis par le premier module d'interaction, le deuxième champ de description décrivant une information de base du premier module d'interaction et des fonctions de rappel liées au cycle de vie du premier module d'interaction ;
la détermination du premier service et du troisième service en analysant le premier champ de description ;
la détermination d'informations de base du premier module d'interaction et de fonctions de rappel liées au cycle de vie du premier module d'interaction en analysant le deuxième champ de description ;
la gestion du cycle de vie du premier module d'interaction en utilisant les informations de base du premier module d'interaction et les fonctions de rappel liées au cycle de vie du premier module d'interaction ;
l'établissement d'une première relation de mappage entre le premier service et le troisième service ;
le lancement d'un processus d'inscription pour le premier service selon les informations de base du premier module d'interaction et la première relation de mappage ;
la réception d'informations de configuration du deuxième module d'interaction, les informations de configuration du deuxième module d'interaction incluant un troisième champ de description avec la première structure générale de données et un quatrième champ de description avec la deuxième structure générale de données, le troisième champ de description décrivant le deuxième service fourni par le deuxième module d'interaction et un quatrième service requis par le deuxième module d'interaction, le quatrième champ de description décrivant une information de base du deuxième module d'interaction et des fonctions de rappel liées au cycle de vie du deuxième module d'interaction ;
la détermination du deuxième service et du quatrième service en analysant le troisième champ de description ;
la détermination d'informations de base du deuxième module d'interaction et de fonctions de rappel liées au cycle de vie du deuxième module d'interaction en analysant le quatrième champ de description ;
la gestion du cycle de vie du deuxième module d'interaction en utilisant les informations de base du deuxième module d'interaction et les fonctions de rappel liées au cycle de vie du deuxième module d'interaction ;
l'établissement d'une deuxième relation de mappage entre le deuxième service et le quatrième service,
le lancement d'un processus d'inscription pour le deuxième service selon les informations de base du deuxième module d'interaction et la deuxième relation de mappage.

10. Procédé (600) selon la revendication 8, comprenant :
la réalisation d'un traitement d'authentification sur un demandeur demandant l'accès au premier service inscrit ou au deuxième service inscrit.

11. Procédé (600) selon la revendication 8, comprenant :
le stockage persistant d'une première donnée industrielle obtenue par le premier module d'interaction à partir du premier dispositif industriel de terrain et d'une deuxième donnée industrielle obtenue par le deuxième module d'interaction à partir du deuxième dispositif industriel de terrain, dans une mémoire ;
la réalisation d'une analyse de données sur la première donnée industrielle et la deuxième donnée industrielle dans la mémoire en réponse à une demande d'analyse de données reçue via le serveur Web.

12. Support de stockage lisible par ordinateur, sur lequel sont stockées des instructions lisibles par ordinateur, les instructions lisibles par ordinateur servant à exécuter un procédé (600) d'intégration de données industrielles selon l'une quelconque des revendications 6 à 11.
